# EUROPÄISCHE PATENTANMELDUNG

(11) **EP 2 317 617 A1**
(43) Veröffentlichungstag der Anmeldung: **04.05.2011**
(21) Anmeldenummer: 09013505.4
(22) Anmeldetag: 27.10.2009
(51) Int. Cl.: H02G 1/16

(54) **Verfahren zur Reparatur der Isolation elektrischer Leitungen**

(71) Anmelder: Harthauß, Norbert, 99958 Tonna (DE)
(72) Erfinder: Harthauß, Norbert, 99958 Tonna (DE)

(57) **Zusammenfassung**

Die Erfindung betrifft ein Verfahren, das insbesondere zur Reparatur eines beschädigten Bereiches einer elektrischen Leitung geeignet ist, wobei mindestes eine Isolationsschicht (1) der elektrischen Leitung aus PTFE besteht. Das Verfahren umfasst:
a) Das Abtragen überstehender Partien (4), insbesondere durch mechanisches Abtragen,
b) Das Aufbringen eines gelösten Flourpolymers,
c) Entfernen des Lösungsmittels mittels Wärme.

Das Verfahren ist insbesondere zur so genannten "in field"-Reparatur und/oder nach der Installation der elektrischen Leitungen in ein Luftfahrzeug geeignet.

## Beschreibung

Die Erfindung betrifft ein Verfahren, insbesondere zur Reparatur eines beschädigten Bereiches einer elektrischen Leitung, wobei mindestes eine Isolationsschicht der elektrischen Leitung aus PTFE besteht.

Im modernen Flugzeugbau finden verbreitet elektrische Leitungen Anwendung. Derartige Leitungen bestehen bevorzugt aus einem elektrischen Leiter aus einer Aluminiumlegierung oder Kupfer. Als Isolator der elektrischen Leiter dienen bevorzugt Schichten aus Polyimid sowie PTFE beziehungsweise Kombinationen beider Schichten. Bevorzugt wird hierbei Polyimid als erste Isolationsschicht (2) auf den elektrischen Leiter (3) aufgebracht. Als letzte Isolationsschicht (1) wird bevorzugt PTFE auf die vorherigen Isolationsschichten aufgebracht.

Ein großes Problem stellen bislang mechanische Beschädigungen dar, zum Beispiel, aber nicht beschränkt auf, Abschürfungen und Einschnitte. Wird die PTFE Isolationsschicht beispielsweise durch eine Abschürfung beschädigt, so besteht die Gefahr, dass aggressive Flüssigkeiten die übrigen Isolationsschichten angreifen und so die elektrische Isolation des Leiters herabgesetzt wird. In einem Fall einer Beschädigung der PTFE Isolationsschicht ist es daher notwendig diese Beschädigung mit einem geeigneten Reparaturverfahren zu beheben. Hierdurch soll der Austausch der beschädigten elektrischen Leitung verhindert werden.

Derzeitiger Stand der Technik ist es, den betroffenen Bereich der elektrischen Leitung mit einem geeigneten Klebeband zu umwickeln, um so einen mechanischen Schutz sowie einen Schutz gegen aggressive Atmosphären und Flüssigkeiten der übrigen Isolationsschichten zu gewährleisten. Nachteil dieser Reparaturtechnik ist, zum einen eine Erhöhung des Gewichtes was insbesondere in Luftfahrzeugen zu vermeiden ist, zum anderen sind solche Reparaturlösungen ggf. während Wartungen zu überprüfen beziehungsweise zu erneuern.

Alternativ zu dieser Reparaturtechnik sind Verfahren gängige Praxis, bei denen ein Schrumpfformteil beziehungsweise Schrumpfschlauch auf den beschädigten Teil der elektrischen Leitung aufgebracht wird. Hierdurch wird ein mechanischer Schutz sowie einen Schutz gegen aggressive Atmosphären und Flüssigkeiten der übrigen Isolationsschichten gewährleistet. Nachteil dieser Reparaturtechnik ist, dass der Schrumpfschlauch über die gesamte Länge der elektrischen Leitung bis zur Beschädigung geschoben werden muss. Dies ist besonders problematisch, da die einzelnen elektrischen Leitungen zu teilweise sehr komplexen Leitungsbündeln zusammen gefasst sind und somit zum Beispiel viele Kabelbinder die das Kabelbündel in Form und Lage bestimmen gelöst werden müssen. Alternativ zu diesem Vorgehen kann die elektrische Leitung vollständig durchtrennt und nach dem Aufschieben des Schrumpfschlauches wieder verbunden werden, was beispielsweise durch Spleißtechniken realisiert wird. Nachteil der Reparatur mittels Schrumpfformteil bzw. Schrumpfschlauch ist daher, zum einen eine Erhöhung des Gewichtes was insbesondere in Luftfahrzeugen zu vermeiden ist, zum anderen sind solche Reparaturlösungen ggf. während Wartungen zu überprüfen beziehungsweise zu erneuern. Die dargestellten Methoden sind darüber hinaus sehr aufwendig in Vorbereitung und Durchführung.
Aufgabe der Erfindung ist es daher, ein Verfahren zu schaffen, durch das eine Reparatur der äußeren Isolationsschicht bestehend aus PTFE mit geringen Aufwand möglich ist und welches die ursprünglichen Eigenschaften der Isolationsschicht weitestgehend wiederherstellt.
Diese Aufgabe wird durch ein Verfahren mit den Schritten nach Maßgabe des Patentanspruches 1 gelöst.
Hierdurch ist es erstmals möglich, eine Beschädigung der PTFE Isolationsschicht (1) einer elektrischen Leitung mit relativ geringen Aufwand manuell auch im Außeneinsatz ("in field") zu reparieren sowie die ursprünglichen Eigenschaften der Isolationsschicht weitestgehend wiederherzustellen.
In einem ersten Arbeitsschritt werden abstehende bzw. überstehende Partien (4) der beschädigten PTFE Isolationsschicht (1) abgetragen. Das Abtragen dieser Partien kann beispielsweise mittels Schneiden, Schleifen Schaben, Fräsen, Polieren oder Hobeln erfolgen. Dieser Arbeitsschritt ist nicht obligatorisch und kann ggf. entfallen.
In einem zweiten Arbeitsschritt wird ein gelöstes Flourpolymer (6) auf den beschädigten Bereich aufgebracht. Hierzu wird ein geeignetes Flourpolymer beispielsweise Teflon® AF mittels eines geignetten perflourierten Lösungsmittels beispielsweise FC-75 (chemische Formel C₈F₁₆O) in Lösung gebracht. Diese Lösung wird beispielsweise durch Sprühen mittels einer Düse (5), Pinseln oder Tauchen aufgebracht.
In einem dritten Arbeitsschritt wird die aufgebrachte Lösung über die Glasübergangstemperatur des benutzen Flourpolymers erwärmt um das Lösungsmittel vollständig zu entfernen. Die Erwärmung sollte möglichst kontaktfrei und bei konstanter Temperatur durchgeführt werden. Hierzu kann beispielsweise ein per Strahlungsthermometer geregelter Infrarotstrahler (7) dienen. Insbesondere während der Erwärmung sollte für eine gute Luftabsaugung gesorgt werden, da die entstehenden Gase ggf. sehr toxisch seien können.
Erforderlichenfalls können diese Arbeitsschritte wiederholt werden um beispielsweise die Schichtdicke der aufgebrachten Isolationsschicht zu erhöhen oder eine homogene Oberfläche herzustellen.

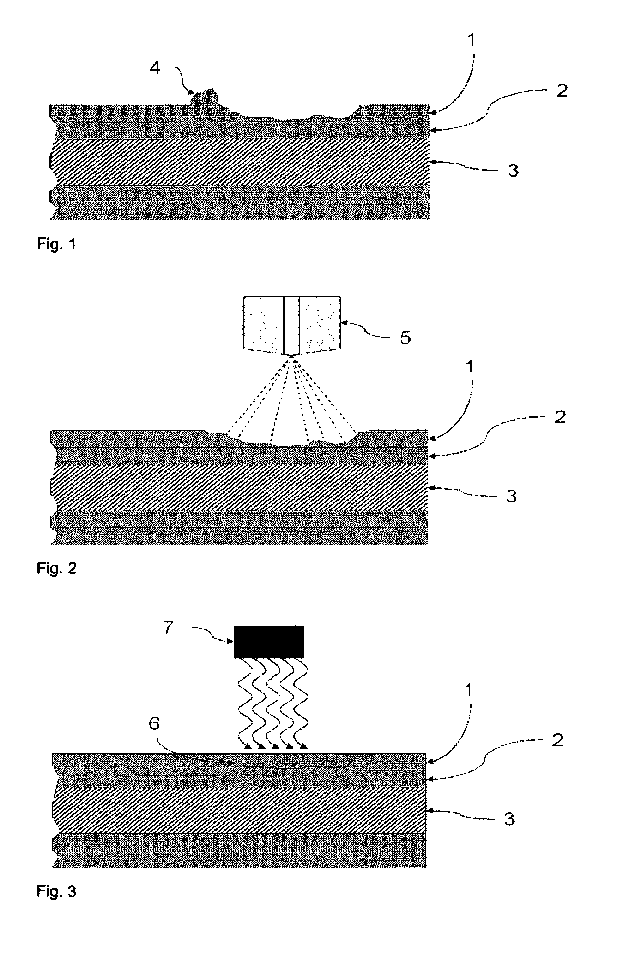

## Patentansprüche

1. Verfahren zur Reparatur eines beschädigten Bereiches einer elektrischen Leitung, wobei mindestes eine Isolationsschicht der elektrischen Leitung aus PTFE besteht, mit folgenden Verfahrensschritten:
a) Abtragen von überstehenden Partien (4) der beschädigten PTFE Isolationsschicht (1);
b) Auftragen eines gelösten Flourpolymers (6) auf den beschädigten Bereich der elektrischen Leitung;
c) Erwärmen des beschädigten Bereiches um das Lösungsmittel zu entfernen. Es folgt 1 Blatt Zeichnungen.
